# EUROPÄISCHE PATENTSCHRIFT

(11) **EP 1 361 621 B1**
(45) Veröffentlichungstag und Bekanntmachung des Hinweises auf die Patenterteilung: **23.10.2013**
(21) Anmeldenummer: 03009657.2
(22) Anmeldetag: 30.04.2003
(51) Int. Cl.: H01M 8/06, H01M 8/04, H01M 8/00

(54) **Verfahren zum Betreiben einer Brennstoffzellenanlage**
Method for operating a fuel cell system
Procédé pour faire fonctionner un système de piles à combustible

(30) Priorität: 06.05.2002 AT 6932002
(43) Veröffentlichungstag der Anmeldung: 12.11.2003
(73) Patentinhaber: Vaillant GmbH, 42859 Remscheid (DE)
(72) Erfinder: Hocker, Thomas, Dr., 42857 Remscheid (DE); Paulus, Jochen, 42655 Solingen (DE); Thomas, Rolf, 42929 Wermelskirchen (DE)
(74) Vertreter: Hocker, Thomas

(56) Entgegenhaltungen:
- EP-A1- 1 061 599
- EP-A2- 1 178 551
- DE-A1- 10 056 843
- DE-A1- 19 517 813

## Beschreibung

Die Erfindung bezieht sich auf ein Verfahren zum Betreiben einer Brennstoffzellenanlage.

In Brennstoffzellen wird mithilfe einer elektrochemischen Reaktion ein Brenngas - zumeist ein wasserstoffhaltiges Gas - oxidiert. Bei dieser Reaktion entsteht elektrische Leistung und Wärme.

Die meisten Brennstoffzellen, insbesondere Polymermembran-Brennstoffzelle, setzen Wasserstoff um. Wasserstoff ist ein Sekundärenergieträger, der aus anderen Energieträgern hergestellt werden muss. Sehr häufig werden hierzu Reformer eingesetzt, die aus Kohlenwasserstoffen ein wasserstoffreiches Prozessgas erzeugen.

Bei Polymermembran-Brennstoffzelle (PEM) wird eine mit Platin katalytisch beschichtete Anode mit wasserstoffreichem Gas angeströmt. Der molekulare Wasserstoff (H₂) wird am Katalysator in atomaren Wasserstoff (H) aufgespalten. Die Wasserstoffatome geben über Interkonnektoren ihre Elektronen (e⁻) an einen Stromkreislauf ab, wodurch die verbleibenden Wasserstoffkerne (H⁺) nur noch aus reinen Protonen bestehen.

Anodische Teilreaktion (Oxidation):

2H₂ → 4H⁺ + 4e⁻

Die Protonen können durch eine Elektrolyt-Membran, die für andere Teilchen undurchlässig ist, zur Kathodenseite der Brennstoffzelle gelangen. An einem Katalysator auf der Kathodenseite wird molekularer Luftsauerstoff unter Zugabe der Elektronen aus dem Stromkreislauf in Sauerstoffionen (O²⁻) umgewandelt. Diese reagieren mit den Protonen zu Wasserdampf.

Kathodische Teilreaktion (Reduktion):

O₂ + 4e⁻ → 2O²⁻

4H⁺ + 2O²⁻ → 2H₂O

Die dabei freiwerdende Energie von 242 kJ/mol wird etwa hälftig in elektrische Leistung und Wärme umgewandelt.

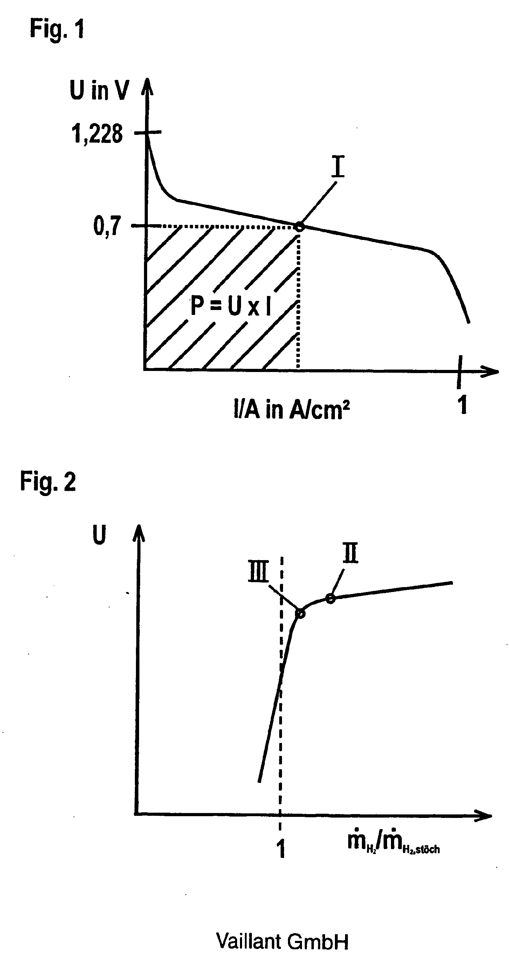

Die Zellspannung ist lastabhängig. Im Leerlauf beträgt sie theoretisch 1,228 V und fällt mit einer Last bei gleichzeitigem Anstieg des Stroms (vgl. Fig. 1). Der Strom wiederum ist - bei ausreichender Wasserstoffversorgung - von der Membranfläche und Last abhängig. In der Praxis werden PEM-Brennstoffzellen mit ungefähr 0,7 Volt betrieben. Mehrere Brennstoffzellen werden zu einem Brennstoffzellenstapel (Stack) in Reihe geschaltet, um eine Spannung zu erhalten, die effizient verarbeitet werden kann.

Da der Wasserstoff, der für die elektrochemische Reaktion in einer PEM-Brennstoffzelle benötigt wird, ein Sekundärenergieträger ist, muß er aus anderen wasserstoffhaltigen Verbindungen hergestellt werden. Für die dezentrale Strom- und Wärmeerzeugung mit Brennstoffzellenanlagen bietet sich eine Erdgasreformierung an, da Erdgas nahezu flächendeckend zur Verfügung steht.

In Anwesenheit eines Katalysators können die Kohlenwasserstoffe (CₙHₘ) mit Sauerstoff (O₂) exotherm partiell oxidiert oder endotherm mit Wasserdampf (H₂O) dampfreformiert werden. Bei beiden Reaktionen entsteht Kohlendioxid (CO₂) und Wasserstoff (H₂).

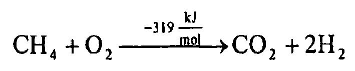

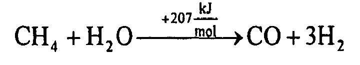

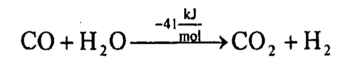

In der Summe ergibt sich somit bei der Dampfreformierung, bei der zusätzlich zum Wasserstoff aus Erdgas auch Wasserstoff aus Wasserdampf produziert wird, folgende Gesamtbilanz:

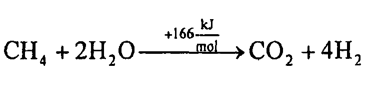

Bei dezentralen Brennstoffzellenanlagen kann eine Kombination aus beiden Reformierungsarten, die autotherme Reformierung, eingesetzt werden. Vorteil dieses Verfahrens ist, dass der Aufwand zum Beheizen beziehungsweise Kühlen des Reaktors minimiert und das Bauvolumen reduziert werden kann.

Bei der Reaktion des Kohlenstoffs eines Kohlenwasserstoffs mit (Luft-)Sauerstoff zu Kohlendioxid wird stets in der Reaktionskette temporär Kohlenmonoxid gebildet. Ist die Reaktion bei der Reformierung unvollständig, so verbleibt Kohlenmonoxid im Prozeßgas. Dieses muß so weit wie möglich abgebaut werden, da Kohlenmonoxid den Katalysator einer Brennstoffzelle belegt und somit die Leistungsfähigkeit einer Zelle zumindest temporär reduziert.

Reformer werden derartig betrieben, daß möglichst wenig Wasserstoff mit Sauerstoff reagiert. Hierbei verbleibt eine relativ hohe Kohlenmonoxidkonzentration im Prozeßgas. Diese wird in einem selektiven Oxidator mit Sauerstoff zu Kohlendioxid aufoxidiert.

2CO + O₂ → 2CO₂

Überstöchiometrische Sauerstoffzugabe führt zu einer ungewollten Oxidation des gebildeten Wasserstoffs zu Wasserdampf. Zwar wird eine hohe Feuchte des Prozeßgases zum Betrieb der Brennstoffzelle zwingend benötigt, doch ist eine Befeuchtung mit Wasser energetisch effizienter. Steigt die Feuchte des Prozeßgases - z.B. durch übermäßige Oxidation des Wasserstoffes - zu weit an, so kann die Zellspannung und somit die Leistung der Brennstoffzelle erheblich fallen.

Neben Kohlenmonoxid muß Schwefel im Prozeßgas vermieden werden. Natürlicher Schwefel ist in Erdgas kaum vorhanden; als Odorierungsmittel werden jedoch meist Schwefelverbindungen dem Gas beigemischt. Am gebräuchlichsten ist Tetrahydrothiophen (THT, C₄H₈S). Zur Entfernung des Schwefels aus dem Erdgas, können Zinkoxid- oder Aktivkohlefilter verwendet werden.

Der aufwändige Reformierungsprozess sollte möglichst stetig betrieben werden. Insbesondere der Startprozess kann einige Stunden dauern, benötigt in dieser Zeit Energie zum Aufheizen des Reformers und führt zu einer Alterung der Katalysatoren. Im Idealfall werden Brennstoffzellenanlagen mit Reformer daher modulierend mit langen Laufzeiten betrieben.

Da Brennstoffzellenanlage gleichzeitig Strom und Wärme produzieren und diese Energiearten in nahezu konstantem Verhältnis in dem Brennstoffzellenstapel entstehen, gibt es die Möglichkeit eine Brennstoffzellenanlage strom- oder wärmegeführt zu betreiben.

Dezentrale Brennstoffzellenanlagen kleiner Leistung werden meist wärmegeführt betrieben. Die Wärme wird dann zur Warmwasserbereitung und Heizung genutzt und der Strom in ein elektrisches Netz eingespeist.

Da die Brennstoffzellenanlage in der Regel nicht für die thermische Spitzenlast eines oder mehrerer Verbraucher ausgelegt ist und Wärme - insbesondere im Sommer - auch nicht stetig benötigt wird, ist meist ein Warmwasserspeicher in die Gesamtanlage integriert. Hierdurch ist es möglich, die Anlage stetig mit nur kleiner Modulationsgeschwindigkeit zu betrieben, was für den Reformer vorteilhaft ist, da dieser aufgrund seiner thermischen Trägheit nicht schnell auf Lastwechsel reagieren kann.

Dennoch ergibt sich das Problem, dass beim Modulieren Schwankungen der Stoffströme auftreten. Da die Brennstoffzellen nicht mit Wasserstoffmangel betrieben werden sollten, da sie ansonsten beschädigt würden, wird beim Lastwechsel teilweise gezielt der Wasserstoffvolumenstrom derartig überhöht eingestellt, dass eine Beschädigung ausgeschlossen ist. Dies hat jedoch eine Reduzierung des elektrischen Wirkungsgrades zur Folge. Da der Reformer zudem thermische Verluste aufweist, kann der überschüssige Wasserstoff auch nur bedingt zu einer Steigerung des thermischen Wirkungsgrades beitragen, so dass der Gesamtwirkungsgrad ebenfalls sinkt.

DE 100 56 843 A1 beschreibt eine Brennstoffregelung, bei der die Zellenspannungen minimiert werden sollen, ohne unter eine Minimalzellenspannung zu fallen. Auch ist das Verhältnis von Strom zu Spannung bekannt. Dieses Verhältnis ist vom Wasserstoffzufluss abhängig. So kann bei Erhöhung des Wasserstoffstroms bei gleicher Spannung der dazugehörige Strom erhöht werden.

DE 195 17 813 A1 lehrt je nach Wärmebedarf individuell über einen DC-AC-Inverter den Zellstrom einem Sollstrom anzupassen.

Aufgabe der Erfindung ist daher eine Brennstoffzellenanlage derart zu betreiben, dass bei jedem Betriebspunkt, insbesondere beim Lastwechsel der Wirkungsgrad optimal ist und gleichzeitig eine Beschädigung der Brennstoffzellen vermieden wird.

Erfindungsgemäß wird dies bei einem Verfahren gemäß dem unabhängigen Anspruch 1 dadurch erreicht, dass eine Regelung die Eingangsströme eines Reformers für Brennstoffzellenanlagen steuert und gleichzeitig dem Brennstoffzellenstapel soviel elektrische Leistung entzogen wird, dass der momentan zur Verfügung stehende Wasserstoff in der Zelle optimal genutzt wird.

Gemäß den Merkmalen des Anspruchs 2 ergibt sich der Vorteil, dass das Gesamtsystem mit einer für dezentrale Kleinanlagen sinnvollen Regelgröße betrieben wird. Elektrischer Strom kann einfach über das elektrische Netz abgegeben oder bezogen werden. Demgegenüber ist eine Abgabe oder Bezug von Wärme über die Grenze einer dezentralen Kleinanlage nicht wirtschaftlich.

Dagegen ergibt sich gemäß den Merkmalen des Anspruchs 3 vorwiegend dann ein Vorteil, wenn die Brennstoffzellenanlage vorwiegend als Stromerzeuger verwendet wird und die Wärme lediglich einen Teil des benötigten Wärmebedarfs abdeckt, so dass sowieso ein zweites Wärmeaggregat zum Einsatz kommt.

Die Merkmale des Anspruchs 4 berücksichtigen die Tatsache, dass die entnommene elektrische Leistung (Strom mal Spannung) bei bekannter Strom-Spannungs-Kennlinie durch Variation der Spannung geändert werden kann.

Gemäß den Merkmalen des Anspruchs 5 werden vorteilhafte Variablen für die Betriebsgröße(n) gemäß Anspruch 4 genannt.

Die Merkmale der Ansprüche 6 und 7 beschreiben vorteilhafte Möglichkeiten zur Bestimmung der Stellgröße Sollspannung.

Gemäß den Merkmalen des Anspruchs 8 wird die Brennstoffzelle mit optimaler Wasserstoffausnutzung betrieben.

Die Erfindung wird nun anhand der Zeichnungen näher erläutert. Dabei zeigt
Fig. 1 eine Strom-Spannungs-Kennlinie einer Brennstoffzelle
Fig. 2 eine Wasserstoff-Spannungs-Kenntinie und
Fig. 3 eine Brennstoffzellenanlage mit Reformer zur Durchführung des Verfahrens.

In Fig. 1 ist ein charakteristischer Verlauf einer Strom-Spannungskennlinie zu sehen. Wie bereits einleitend in der Beschreibung erwähnt, beträgt die theoretische Zellspannung 1,228 V und fällt bei steigender Last. Die Leistung ergibt sich aus dem Produkt von Strom und Spannung und ist bei etwa 0,7 V maximal. Der Punkt I soll den Sollwert darstellen.

Fig. 2 zeigt den Zusammenhang zwischen der Wasserstoffstöchiometrie und der Zellspannung. Als Wasserstoffstöchiometie wird das Verhältnis zwischen dem zugeführten Wasserstoffstrom ṁ_{H2} und dem stöchiometrisch notwendigen Wasserstoff ṁ_{H2}, stöchiometrsich zur theoretischen Befriedigung der Sollleistung bezeichnet. Eine Brennstoffzelle benötigt einen bestimmten Wasserstoffüberschuss; ist dieser überschritten, so ist die Zellspannung nahezu konstant. Unterschreitet die Wasserstoffstöchiometrie diesen Mindestüberschuss, so bricht die Zellspannung ein; dieser Punkt ist in dem Diagramm mit II bezeichnet. Ist die Wasserstoffstöchiometrie deutlich kleiner als diese Grenzstöchiometrie, so bricht die Spannung erheblich ein und die Membran der Brennstoffzelle wird beschädigt. Es ist jedoch möglich, die Zelle mit einer Wasserstoffstöchiometrie leicht unterhalb der oben genannten Grenzstöchiometrie zu betreiben und dabei nur einen geringen Einbruch der Zellspannung zu haben; dieser Punkt ist mit III im Diagramm bezeichnet. Im Punkt III ist die Nutzung des Wasserstoffs sehr hoch; das heißt, dass nur relativ wenig Wasserstoff die Brennstoffzelle ungenutzt verläßt. Gleichzeitig ist genügend Wasserstoff vorhanden, um eine Beschädigung der Brennstoffzellenmembran zu verhindern.

Die Zellspannung verändert sich gemäß Fig. 1 langsam mit der elektrischen Last oder im Punkt des Mindestüberschusses II der Wasserstoffstöchiometrie. Aufgrund des Gradienten läßt sich eindeutig feststellen, ob bei Lasterhöhung ein "normaler" Spannungsabfall gemäß Fig. 1 oder ein übermäßiger Spannungsabfall gemäß Fig. 2 vorliegt.

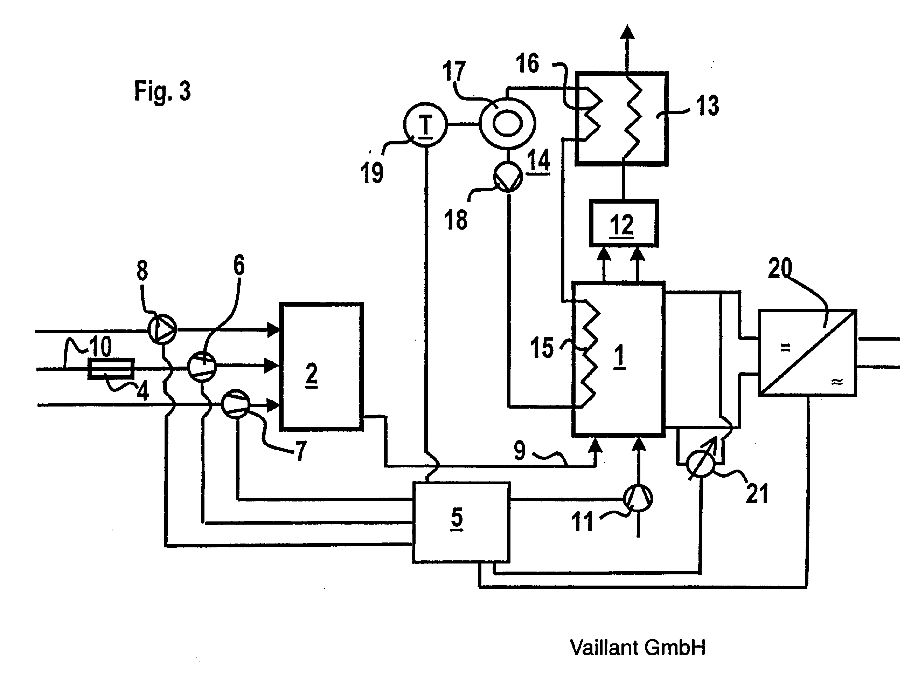

In Fig. 3 ist eine Brennstoffzellenanlage mit Reformer zur Erzeugung von wasserstoffreichem Prozessgas aus Erdgas vereinfacht dargestellt. Ein Erdgasanschluß 10 ist mit einem Schwefelfilter 4 und stromauf mit einem regelbaren Kompressor 6 zur Druckerhöhung verbunden, um anschließend einem Reformer 2 zugeführt zu werden. In den Reformer 2 gelangt ebenfalls Wasserdampf über eine regelbare Pumpe 8 und Luftsauerstoff über einen regelbaren Kompressor 7. Der Reformer 2 ist über eine Verbindungsleitung 9 mit einem Brennstoffzellenstapel 1 auf der Anodenseite verbunden. Auf der Kathodenseite des Brennstoffzellenstapels 1 ist ein Kompressor 11, der auf seiner Ansaugseite mit Umgebungsluft verbunden ist, angeschlossen. Die Gasausgänge des Brennstoffzellenstapels 1 sind mit einem kathalytischen Nachbrenner 12 verbunden. Von diesem führt eine Leitung zu einem Abgaswärmeaustauscher 13. Ein Kühlkreislauf 14 verfügt über einen Wärmeaustauscher 15 im Brennstoffzellenstapel 1, einen Wärmeaustauscher 16 im Abgaswärmeaustauscher 13, einen thermischen Verbraucher 17 mit Temperatursensor 19 und eine Umwälzpumpe 18. Der Brennstoffzellenstapel 1 ist ferner mit einem Wechselrichter 20 und einem Spannungsmesser 21 verbunden. Die Kompressoren 6, 7, 11, die Umwälzpumpe 8, der Temperatursensor 19, der Wechselrichter 20 und der Spannungsmesser 21 sind mit der Regelung 5 verbunden.

Erdgas, Luft und Wasser gelangen über die Kompressoren 6, 7 beziehungsweise die Pumpe 8 in den Reformer 2, in dem wasserstoffreiches Prozessgas reformiert wird. Das dabei entstandene Kohlenmonoxid wird in einer 2. Stufe mit Luftsauerstoff zu Kohlendioxid aufoxidiert. Das Reformat wird befeuchtet und strömt über eine Verbindungsleitung 9 die Anoden der einzelnen Brennstoffzellen an. Gleichzeitig wird befeuchtete Luft der Kathodenseite des Brennstoffzellenstapels 1 zugeführt. Wasserstoff und Sauerstoff reagieren elektrochemisch in dem Brennstoffzellenstapel 1 und produzieren dabei elektrische Energie und Wärme. Ein Wechselrichter 20 wandelt die Gleichspannung, die im Brennstoffzellenstapel 1 erzeugt wird, in netzgerechte 230 V Wechselspannung (50 Hz) um. Ein Teil der freiwerdenden Wärme wird über den Wärmeaustauscher 15 auf den Kühlkreislauf 14 übertragen. Da der Brennstoffzellenstapel 1 nicht das gesamte ihr zugeführte Brenngas umsetzt, werden die brennbaren Bestandteile des Abgases in einem katalytischen Nachbrenner 12 verbrannt. Das so erlangte heiße Abgas wird dann über den Wärmeaustauscher 16 zum Erwärmen des Kühlkreislaufs 14 verwendet. Der Kühlkreislauf 14 gibt wiederum seine Wärme an einen thermischen Verbraucher 17 ab. Dieser thermischen Verbraucher 17 kann zusätzlich mit Hilfe eines Zusatzheizgerätes beheizt werden.

Diese stark vereinfachte Darstellung zeigt nicht die Vorrichtungen zum Beheizen des Reformers, die Deionisierung des dem Prozessgas zugeführten Wasser, den Brennstoffzellenkühlkreislauf und andere Details, welche für die hier vorliegende Erfindung nicht relevant sind.

Während des Betriebs gibt der Temperatursensor 19 des thermischen Verbrauchers 17 einen Wärmebedarf vor. Das Signal wird an die Regelung 5 weitergeleitet, welche eine Sollleistung der Brennstoffzellenanlage errechnet und dementsprechend den regelbaren Kompressor 6 derartig ansteuert, dass der notwendige Erdgasstrom in das System gelangt. Entsprechend wird über den Kompressor 7 die notwendige Luftmenge angesaugt und über die Pumpe 8 die notwendige Wassermenge gefördert. Entsprechend des momentanen Zustandes des Reformers 2 gelangt ein wasserstoffhaltiges Prozessgas zum Brennstoffzellenstapel 1. Die Regelung 5 steuert den Kompressor 11 derartig, dass der Brennstoffzellenstapel 1 genügend Luft erhält.

Die Regelung 5 gibt dem Wechselrichter 20 das Signal zur Entnahme einer Last, welche von der Belastung des Reformers 2 und insbesondere bei instationären Zuständen weiteren Betriebsparametern abhängig ist. Durch Erhöhen oder Absenken der Last, welche der Wechselrichter 20 den Brennstoffzellenstapel 1 entzieht, kann die Regelung über den Spannungsmesser 21 erkennen, wann der optimale Betriebspunkt III gemäß Fig. 2 vorliegt. Somit kann insbeondere auch bei instationären Betriebszuständen die maximal mögliche elektrische Leistung entzogen werden.

Wird beispielsweise die Sollleistung erhöht, so liegt zunächst aufgrund der Trägheit des Reformers 2 temporär zuwenig Wasserstoff im Brennstoffzellenstapel 1 vor. Der Wechselrichter 20 entzieht dann gemäß oben erwähntem Verfahren nur soviel elektrische Leistung, bis der optimale Betriebspunkt III gemäß Fig. 2 vorliegt. Wird die Sollleistung erhöht, so liegt zunächst aufgrund der Trägheit des Reformers 2 temporär zuviel Wasserstoff im Brennstoffzellenstapel 1 vor. Der Wechselrichter 20 entzieht dann gemäß oben erwähntem Verfahren dann mehr elektrische Leistung, bis der optimale Betriebspunkt III gemäß Fig. 2 vorliegt. Somit wird der Reformer 2 gemäß der Sollleistung belastet, der Brennstoffzellenstapel 1 jedoch gemäß der aktuell vorliegenden Wasserstoffmenge.

Beispiel: Ein Brennstoffzellenstapel 1 verfügt über 80 Einzelzellen. Jede Einzelzelle verfügt über 100 cm² Membranfläche; in der Summe sind es also 8.000 cm². Es soll gemäß einer Wärmeanforderung des Temperatursensors 19 3,5 kW Wärme dem System entzogen werden. Die Regelung 5 stellt die Eingangsvolumenströme des Reformers 2 entsprechend ein. Ferner errechnet die Regelung 5 eine korrespondierende elektrische Leistung von 2,8 kW. Die Regelung 5 stellt hierzu einen Sollbetriebspunkt von 0,5 A/cm² und 0,7 V Zellspannung fest. Hieraus ergeben sich 8.000 cm² x 0,5 A/cm² x 0,7 V = 2,8 kW. Dementsprechend wird der Stack zunächst mit einem Strom belastet, dass sich 0,705 V Zellspannung beziehungsweise 56,4 V Stackspannung einstellt. Der Strom wird dann erhöht, bis sich ein charakteristischer Spannungseinbruch (ΔU/Δt), der vom Spannungsmesser 21 in Verbindung mit der Regelung 5 erkannt wird, ergibt. Aufgrund des instationären Zustandes verändert sich die Wasserstoffbelastung des Brennstoffzellenstapels 1. Die Regelung 5 erhöht und senkt über den Wechselrichter 20 die elektrische Belastung des Brennstoffzellenstapels 1, um ständig die optimale elektrische Last zu entnehmen.

## Patentansprüche

1. Verfahren zum Betreiben einer Anlage zur gleichzeitigen Erzeugung von elektrischer und thermischer Energie mit mindestens einem Brennstoffzellenstapel (1) mit einem Reformer (2) zur Herstellung von wasserstoffreichem Prozessgas aus Kohlenwasserstoffen und einer Regelung (5), bei der die Regelung (5) die Eingangsvolumenströme, insbesondere den Brenngasstrom des Reformers (2) steuert, **dadurch gekennzeichnet, dass** dem Brennstoffzellenstapel (1) soviel Leistung entzogen wird, dass sich ein vorgegebener Spannungsgradient einstellt.

2. Verfahren zum Betreiben einer Anlage zur gleichzeitigen Erzeugung von elektrischer und thermischer Energie gemäß Anspruch 1, **dadurch gekennzeichnet, dass** die Regelung (5) die Eingangsvolumenströme in Abhängigkeit einer vorgegebenen Wärmeanforderung steuert.

3. Verfahren zum Betreiben einer Anlage zur gleichzeitigen Erzeugung von elektrischer und thermischer Energie gemäß Anspruch 1, **dadurch gekennzeichnet, dass** die Regelung (5) die Eingangsvolumenströme in Abhängigkeit einer vorgegebenen Stromanforderung steuert.

4. Verfahren zum Betreiben einer Anlage zur gleichzeitigen Erzeugung von elektrischer und thermischer Energie gemäß einem der Ansprüche 1 bis 3, **dadurch gekennzeichnet, dass** die Sollspannung und / oder Spannungsgradient von einer Betriebsgröße abhängig ist.

5. Verfahren zum Betreiben einer Anlage zur gleichzeitigen Erzeugung von elektrischer und thermischer Energie gemäß Anspruch 4, **dadurch gekennzeichnet, dass** die Betriebsgröße, von der die Sollspannung und / oder Spannungsgradient abhängig ist, die Wärmeanforderung, die Stromanforderung und / oder der Brenngasstrom ist.

6. Verfahren zum Betreiben einer Anlage zur gleichzeitigen Erzeugung von elektrischer und thermischer Energie gemäß einem der Ansprüche 4 oder 5, **dadurch gekennzeichnet, dass** die Sollspannung und / oder Spannungsgradient aus den Betriebsgrößen errechnet wird.

7. Verfahren zum Betreiben einer Anlage zur gleichzeitigen Erzeugung von elektrischer und thermischer Energie gemäß einem der Ansprüche 4 oder 5, **dadurch gekennzeichnet, dass** die Sollspannung und / oder Spannungsgradient aus einem Kennfeld entnommen wird.

8. Verfahren zum Betreiben einer Anlage zur gleichzeitigen Erzeugung von elektrischer und thermischer Energie gemäß einem der Ansprüche 1 bis 7, **dadurch gekennzeichnet, dass** der Brennstoffzellenstapel (1) mit einer Spannung betrieben wird, die geringfügig kleiner als die Spannung, die sich einstellt, wenn bei Lasterhöhung ein übermäßiger Spannungsabfall vorliegt, ist.

## Claims

1. Process for the operation of a system for the simultaneous production of electrical and thermal energy having at least one fuel cell stack (1) with a reformer (2) for the production of hydrogen-rich process gas made from hydrocarbons and a control (5), in which the control (5) controls the input flows, in particular the fuel gas flow of the reformer (2), **characterised in that**, so much power is extracted from the fuel cell stack (1), that a predetermined voltage gradient is reached.

2. Process for the operation of a system for the simultaneous production of electrical and thermal energy according to claim 1, **characterised in that**, the control (5) controls the input flows depending on a predetermined heat requirement.

3. Process for the operation of a system for the simultaneous production of electrical and thermal energy according to claim 1, **characterised in that**, the control (5) controls the input flows depending on a predetermined electricity requirement.

4. Process for the operation of a system for the simultaneous production of electrical and thermal energy according to one of claims 1 to 3, **characterised in that**, the target voltage and / or voltage gradient is dependent on the operation size.

5. Process for the operation of a system for the simultaneous production of electrical and thermal energy according to claim 4, **characterised in that**, the operation size, on which the target voltage and / or voltage gradient is dependent, is the electricity requirement and / or the fuel gas flow.

6. Process for the operation of a system for the simultaneous production of electrical and thermal energy according to one of claims 4 or 5, **characterised in that**, the target voltage and / or voltage gradient is calculated from the operation sizes.

7. Process for the operation of a system for the simultaneous production of electrical and thermal energy according to one of claims 4 or 5, **characterised in that**, the target voltage and / or voltage gradient is taken from a characteristic diagram.

8. Process for the operation of a system for the simultaneous production of electrical and thermal energy according to one of claims 1 to 7, **characterised in that**, the fuel cell stack (1) is operated with a voltage, which is marginally smaller than the voltage, which is reached if an excess voltage drop exists in the event of a load increase.

## Revendications

1. Procédé d'entraînement d'un dispositif destiné à produire simultanément de l'énergie électrique et de l'énergie thermique, avec au moins une pile de cellules électrochimiques (1) dotée d'un reformeur (2) destiné à produire un gaz de procédé riche en hydrogène à partir d'hydrocarbures et d'un dispositif de réglage (5), dans lequel le dispositif de réglage (5) contrôle les débits d'entrée, notamment le débit du gaz combustible du reformeur (2), **caractérisé en ce qu'**une puissance telle est obtenue par la pile de cellules électrochimiques (1), qu'un gradient de tension prédéfini se produit.

2. Procédé d'entraînement d'un dispositif destiné à produire simultanément de l'énergie électrique et de l'énergie thermique selon la revendication 1, **caractérisé en ce que** le dispositif de réglage (5) contrôle les débits d'entrée en fonction d'une demande de chaleur prédéfinie.

3. Procédé d'entraînement d'un dispositif destiné à produire simultanément de l'énergie électrique et de l'énergie thermique selon la revendication 1, **caractérisé en ce que** le dispositif de réglage (5) contrôle les débits d'entrée en fonction d'une demande de débit prédéfinie.

4. Procédé d'entraînement d'un dispositif destiné à produire simultanément de l'énergie électrique et de l'énergie thermique selon les revendications 1 à 3, **caractérisé en ce que** la tension de consigne et/ou le gradient de tension dépend du volume d'exploitation.

5. Procédé d'entraînement d'un dispositif destiné à produire simultanément de l'énergie électrique et de l'énergie thermique selon la revendication 4, **caractérisé en ce que** le volume d'exploitation dont dépend la tension de consigne et/ou le gradient de tension est la demande de chaleur, la demande de débit et/ou le débit du gaz combustible.

6. Procédé d'entraînement d'un dispositif destiné à produire simultanément de l'énergie électrique et de l'énergie thermique selon l'une quelconque des revendications 4 ou 5, **caractérisé en ce que** la tension de consigne et/ou le gradient de tension est calculé à partir des volumes d'exploitation.

7. Procédé d'entraînement d'un dispositif destiné à produire simultanément de l'énergie électrique et de l'énergie thermique selon l'une quelconque des revendications 4 ou 5, **caractérisé en ce que** la tension de consigne et/ou le gradient de tension est déduit d'un diagramme caractéristique.

8. Procédé d'entraînement d'un dispositif destiné à produire simultanément de l'énergie électrique et de l'énergie thermique selon l'une quelconque des revendications 1 à 7, **caractérisé en ce que** la pile de cellules électrochimiques (1) est actionnée avec une tension légèrement plus basse que la tension déterminée lorsqu'une importante chute de tension se produit en cas d'augmentation de la charge.
